(19) Europäisches Patentamt / European Patent Office / Office européen des brevets

(11) **EP 3 419 877 B1**

(12) **FASCICULE DE BREVET EUROPEEN**

(45) Date de publication et mention
de la délivrance du brevet:
**06.12.2023 Bulletin 2023/49**

(21) Numéro de dépôt: **17707005.9**

(22) Date de dépôt: **23.02.2017**

(51) Classification Internationale des Brevets (IPC):
***B60W 30/16*** *(2020.01)* ***B60W 50/00*** *(2006.01)*

(52) Classification Coopérative des Brevets (CPC):
**B60W 30/16; B60W 30/18145; B60W 50/0097;**
B60W 2552/15; B60W 2552/30; B60W 2556/50

(86) Numéro de dépôt international:
**PCT/EP2017/054257**

(87) Numéro de publication internationale:
**WO 2017/144627 (31.08.2017 Gazette 2017/35)**

(54) **DISPOSITIF ET PROCÉDÉ D'AIDE À LA CONDUITE D'UN VÉHICULE AUTOMOBILE**

KRAFTFAHRZEUGFAHRASSISTENZVORRICHTUNG UND -VERFAHREN

MOTOR VEHICLE DRIVING ASSISTANCE DEVICE AND METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.02.2016 FR 1651477**

(43) Date de publication de la demande:
**02.01.2019 Bulletin 2019/01**

(73) Titulaire: **Valeo Schalter und Sensoren GmbH
74321 Bietigheim-Bissingen (DE)**

(72) Inventeurs:
• **GARNAULT, Alexandre
94046 Créteil Cedex (FR)**
• **HEITZMANN, Thomas
94046 Créteil Cedex (FR)**
• **RESENDE, Paulo
94046 Créteil Cedex (FR)**
• **BRADAI, Benazouz
94046 Créteil Cedex (FR)**
• **QUIVY, Charles-Henri
94046 Créteil Cedex (FR)**

(74) Mandataire: **Claassen, Maarten Pieter et al
Valeo Schalter und Sensoren GmbH
CDA-IP
Laiernstraße 12
74321 Bietigheim-Bissingen (DE)**

(56) Documents cités:
EP-A1- 1 736 797          DE-A1-102009 055 787
DE-A1-102012 025 159

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE AUQUEL SE RAPPORTE L'INVENTION

La présente invention concerne un dispositif et un procédé d'aide à la conduite d'un véhicule automobile.
Elle concerne plus particulièrement un dispositif d'aide à la conduite comprenant un capteur, tel qu'un capteur d'images, permettant de détecter la présence d'un obstacle sur une route empruntée par ce véhicule automobile.
Elle s'applique particulièrement avantageusement dans un véhicule automobile empruntant une route sinueuse présentant de fréquents changements de direction, ou empruntant une route présentant un ou plusieurs changements de pente abruptes.

ARRIERE-PLAN TECHNOLOGIQUE

De nombreux véhicules automobiles sont équipés aujourd'hui d'un dispositif d'aide à la conduite comprenant une caméra frontale permettant de détecter la présence d'un obstacle, tel qu'un piéton, un animal, ou un autre véhicule, sur une route empruntée par ce véhicule automobile. Un tel dispositif d'aide à la conduite est généralement adapté à déterminer en outre une distance séparant cet obstacle et le véhicule automobile qu'il équipe.
Un tel dispositif d'aide à la conduite peut être adapté en outre à commander différentes fonctions d'aide à la conduite lorsque cet obstacle est détecté.
On connait en particulier un dispositif d'aide à la conduite tel que décrit ci-dessus, adapté à commander une décélération du véhicule automobile, ou à déclencher une phase d'assistance au freinage lorsqu'un tel obstacle est détecté.
On connait également un dispositif d'aide à la conduite adapté à commander la vitesse du véhicule automobile de manière, lorsqu'un autre véhicule le précède sur la même voie de circulation, à maintenir la distance séparant les deux véhicules approximativement égale à une distance de consigne, et ce sans intervention, ou avec une intervention réduite du conducteur.
Mais une portion de la route empruntée par le véhicule automobile, vers laquelle il se dirige, peut être située hors du champ de vision de cette caméra frontale, par exemple lorsqu'un virage ou un sommet de côte fait face au véhicule automobile. DE 10 2009 055 787 A et EP-A-1 736 797 divulguent des dispositifs d'aide à la conduite considérant la perte d'un véhicule précédant cible à cause d'une courbure ou d'une pente.
Le dispositif d'aide à la conduite n'est alors pas en mesure de détecter la présence d'un obstacle situé au niveau de cette portion de route, hors du champ de vision de la caméra frontale, ce qui peut perturber la mise en oeuvre de fonctions d'aide à la conduite précitées.
Dans une telle situation, le dispositif d'aide à la conduite peut en particulier interpréter de manière erronée l'absence d'obstacle dans le champ de vision de la caméra comme indiquant une absence d'obstacle sur la route empruntée par le véhicule automobile.

OBJET DE L'INVENTION

Afin de remédier à l'inconvénient précité de l'état de la technique, la présente invention propose un dispositif d'aide à la conduite d'un véhicule automobile empruntant une route comprenant :

-   un capteur adapté à acquérir un signal représentatif de la présence d'un obstacle à l'intérieur d'un champ de détection de ce capteur, et
-   un module de commande programmé pour piloter une fonction d'aide à la conduite du véhicule automobile en fonction du signal acquis par ledit capteur, le module de commande étant programmé en outre pour :

      a) détecter, sur la base d'une position du véhicule automobile et de caractéristiques de ladite route, une portion de cette route située hors du champ de détection dudit capteur, et
      b) en cas de détection de cette portion de route située hors du champ de détection dudit capteur, piloter ladite fonction d'aide à la conduite en tenant compte de la présence potentielle d'un obstacle au niveau de ladite portion de route.

Détecter ainsi cette portion de route située hors du champ de détection de ce capteur, vers laquelle le véhicule automobile est susceptible de se diriger, complète de manière particulièrement intéressante les informations relatives à la présence éventuelle d'un obstacle dans l'environnement routier de ce véhicule tirées du signal acquis par ce capteur.
En particulier, lorsqu'aucun obstacle n'est détecté par ce capteur, le dispositif d'aide à la conduite peut détecter, grâce à l'invention, qu'un obstacle est néanmoins susceptible d'être présent sur la route empruntée par le véhicule automobile, ce qui permet alors d'adapter au mieux le pilotage de ladite fonction d'aide à la conduite à l'environnement routier dans lequel évolue le véhicule automobile.
On peut prévoir en particulier que le module d'aide à la conduite est programmé pour, en cas de détection de cette portion de route située hors du champ de détection dudit capteur, piloter, c'est-à-dire commander, ladite fonction d'aide à la conduite comme si un obstacle était effectivement présent au niveau de cette portion de route.
Cette disposition est particulièrement intéressante lorsque la fonction d'aide à la conduite ainsi pilotée comprend une fonction d'évitement d'obstacle, ou une fonction de réduction de la vitesse du véhicule automobile à l'approche d'un obstacle telle qu'une fonction de freinage d'urgence, ou d'assistance au freinage.

Selon l'invention, le module d'aide à la conduite est programmé pour, en cas de détection de cette portion de route située hors du champ de détection dudit capteur :

- évaluer une distance séparant le véhicule automobile d'une position à laquelle, ou à partir de laquelle l'obstacle potentiellement présent sur cette portion de route est susceptible d'être situé, et
- piloter ladite fonction d'aide à la conduite en fonction de cette distance.

Préférentiellement, le dispositif d'aide à la conduite comprend de plus un système de navigation comportant des moyens de localisation adaptés à déterminer ladite position du véhicule automobile, ainsi que des données cartographiques numériques comprenant lesdites caractéristiques de la route empruntée par le véhicule automobile.

Lesdites caractéristiques de la route empruntée par le véhicule automobile peuvent en particulier comprendre une information représentative d'un changement de direction et/ou de pente de la route empruntée par le véhicule automobile.

Grâce à ce système de navigation, la présence potentielle d'un obstacle situé sur la route empruntée par le véhicule, hors du champ de détection dudit capteur, peut être détectée efficacement, et cela indépendamment du type d'obstacle qui pourrait être présent au niveau de ladite portion de route.

Une autre solution, pour détecter la présence d'un obstacle situé sur la route empruntée par le véhicule, hors du champ de détection dudit capteur, repose sur l'utilisation de données échangées entre différents véhicules circulant sur ladite route, par l'intermédiaire de liaisons et d'un réseau sans fil (ou réseau V2X, selon l'acronyme anglo-saxon de « Vehicule-to-X communication »). Mais, comparée à l'utilisation d'un système de navigation du type GPS, la mise en place d'une telle solution est plus complexe et coûteuse. En outre, cette solution ne permet de détecter la présence potentielle (hors du champ de détection dudit capteur) que d'un obstacle faisant partie de ce réseau de communication ; elle ne permet ainsi pas de détecter la présence d'un obstacle correspondant à un animal, par exemple.

D'autres caractéristiques non limitatives et avantageuses du dispositif d'aide à la conduite conforme à l'invention sont les suivantes :

- le module de commande est programmé en outre pour, à l'étape a), déterminer, sur la base de ladite position du véhicule automobile et desdites caractéristiques de la route qu'il emprunte, une distance séparant le véhicule automobile de ladite portion de route, et, à l'étape b), piloter ladite fonction d'aide à la conduite en tenant compte de cette distance séparant le véhicule automobile de ladite portion de route ;

- ladite fonction d'aide à la conduite comprend une fonction de réduction de la vitesse du véhicule automobile à l'approche d'un obstacle ;
- le module de commande est programmé en outre pour, à l'étape b), commander une décélération du véhicule automobile lorsque la distance séparant le véhicule automobile de ladite portion de route est inférieure à une distance limite donnée.

Il est particulièrement avantageux de commander une telle décélération du véhicule automobile, lorsque cette portion de route est ainsi située à une distance du véhicule inférieure à ladite distance limite donnée, car un obstacle peut alors être situé au niveau de cette portion de route, et donc être proche du véhicule, sans que cet obstacle ne puisse être détecté au moyen dudit capteur.

On peut prévoir également que :

- ledit signal est représentatif en outre d'une distance séparant le capteur et l'obstacle présent dans son champ de détection ;
- le module de commande est programmé en outre pour, lorsque la présence d'un obstacle dans le champ de détection dudit capteur est détectée sur la base du signal acquis par ce capteur, puis que cet obstacle sort du champ de détection de ce capteur et que ladite portion de route située hors du champ de détection de ce capteur est détectée à l'étape a), estimer alors que ledit obstacle est présent au niveau de ladite portion de route, et piloter ladite fonction d'aide à la conduite en tenant compte de la présence de cet obstacle au niveau de ladite portion de route ; ou que
- le module de commande est programmé en outre pour, lorsqu'il est estimé que ledit obstacle est présent au niveau de ladite portion de route, déterminer alors une distance probable séparant cet obstacle et le véhicule automobile, en fonction d'une distance entre ledit obstacle et ledit capteur déterminée sur la base du signal ayant permis précédemment de détecter la présence de cet obstacle dans le champ de détection dudit capteur, et piloter ladite fonction d'aide à la conduite en fonction de ladite distance probable.

Grâce à cette disposition, le module de commande peut avantageusement continuer à piloter une fonction d'aide à la conduite basée sur une distance séparant le véhicule automobile et un obstacle située sur ladite route, et ce même si cet obstacle est ainsi situé hors du champ de détection dudit capteur.

On peut prévoir aussi que :

- le module de commande est programmé en outre pour déterminer ladite distance probable séparant le véhicule automobile et ledit obstacle en fonction d'une vitesse de déplacement de cet obstacle, déterminée en fonction dudit signal ayant permis précédemment de détecter la présence de cet obstacle dans le champ de détection dudit capteur ;

- le module de commande est programmé en outre pour commander une décélération du véhicule automobile lorsque ladite distance probable est inférieure à une distance de sécurité donnée ;

- ledit obstacle étant un autre véhicule automobile suivi par le véhicule automobile qu'équipe le dispositif d'aide à la conduite, et ladite fonction d'aide à la conduite comprenant une fonction de suivi automatique de véhicule, le module de commande est programmé en outre pour commander la vitesse du véhicule automobile qu'il équipe de manière que, lorsqu'il est estimé que ledit véhicule suivi est présent au niveau de ladite portion de route, ladite distance probable est environ égale à une distance de consigne donnée.

Grâce à cette disposition, le module de commande pilote cette fonction de suivi automatique de véhicule de manière avantageusement continue, sans interruption malgré une sortie momentanée du véhicule suivi hors du champ de détection dudit capteur.

Cela évite notamment, lorsque le véhicule suivi sort de ce champ de détection, que le module de commande ne commande inutilement une accélération (du véhicule qu'il équipe) alors que le véhicule suivi, bien que non momentanément non détectable, n'a pas libéré la route 2 sur laquelle circulent ces véhicules.

On peut prévoir par ailleurs que ledit capteur comprend un capteur d'images.

L'invention propose également un procédé d'aide à la conduite d'un véhicule automobile selon la revendication 13.

Les caractéristiques optionnelles présentées ci-dessus en termes de dispositif peuvent s'appliquer au procédé qui vient d'être présenté.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement, vu de dessus, un véhicule automobile équipé d'un dispositif d'aide à la conduite mettant en oeuvre les enseignements de l'invention, qui comporte un capteur adapté à acquérir un signal représentatif de la présence d'un obstacle dans son champ de détection ;

- les figures 2 et 3 représentent schématiquement deux configurations routières dans lesquelles une portion d'une route empruntée par le véhicule automobile de la figure 1 est située hors du champ de détection du capteur précité ;

- les figures 4A et 4B représentent schématiquement, à deux instants successifs, une configuration routière similaire à celle de la figure 2, et dans laquelle le véhicule automobile de la figure 1 suit en outre un autre véhicule automobile ;

- les figures 5A et 5B représentent schématiquement, à deux instants successifs, une configuration routière similaire à celle de la figure 3, et dans laquelle le véhicule automobile de la figure 1 suit en outre un autre véhicule automobile ;

- les figures 6A et 6B représentent schématiquement, à deux instants successifs, une autre configuration routière dans laquelle le véhicule automobile de la figure 1 suit un autre véhicule automobile, et dans laquelle une portion de la route empruntée est située hors du champ de détection dudit capteur ; et

- la figure 7 représente schématiquement, sous la forme d'un organigramme, les principales étapes d'un procédé d'aide à la conduite mettant en oeuvre les enseignements de l'invention.

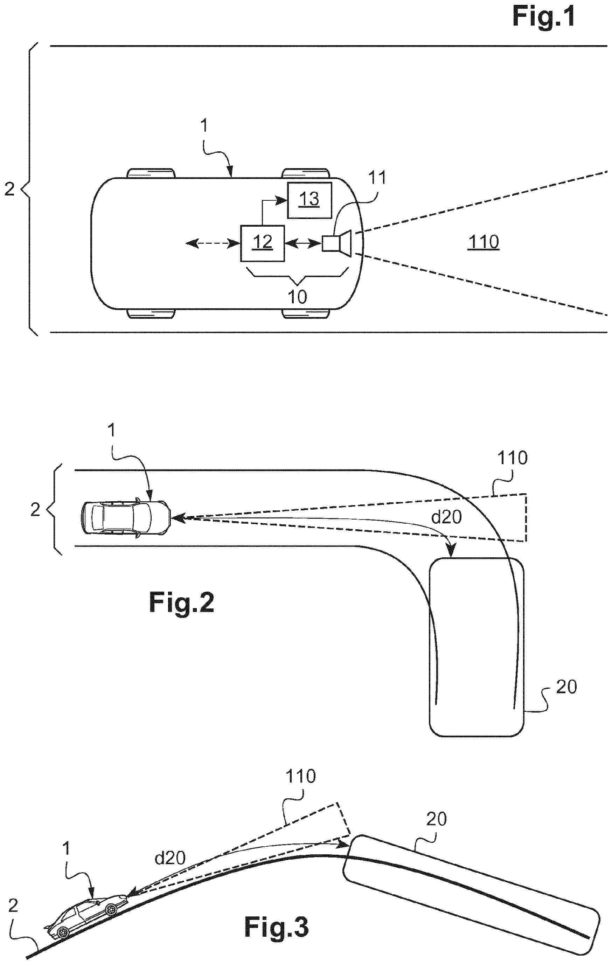

Sur la figure 1, on a représenté schématiquement les principaux éléments d'un dispositif d'aide à la conduite 10 mettant en oeuvre les enseignements de l'invention.

Ce dispositif d'aide à la conduite 10 est adapté à être installé dans un véhicule 1 automobile, pour en faciliter la conduite.

Ce dispositif d'aide à la conduite 10 comprend un capteur 11 adapté à acquérir un signal représentatif de la présence d'un obstacle, tel qu'un piéton, un animal, un autre véhicule ou encore une zone de travaux routiers, à l'intérieur d'un champ de détection 110 de ce capteur 11.

Ce capteur 11 peut par exemple comprendre un capteur d'images, tel qu'une caméra vidéo. Ledit signal représentatif de la présence d'un obstacle dans son champ de détection, correspond alors à une ou plusieurs images acquises par ce capteur d'images.

Ce capteur 11 peut également comprendre un lidar (selon l'acronyme anglo-saxon de « LIght Détection And Ranging »), ou encore un radar. Ledit signal acquis par ce capteur 11 comprend alors par exemple un signal d'écho acquis par ce lidar ou ce radar, ou des données extraites d'un tel signal d'écho.

On entend par champ de détection 110 de ce capteur 11 la région de l'espace dans laquelle un obstacle peut être détecté au moyen de ce capteur 11. Par exemple, lorsque ce capteur est réalisé sous la forme d'un capteur d'images, ce champ de détection correspond au champ de vision de ce capteur d'images, c'est-à-dire à la région de l'espace dont l'image est capturée, c'est-à-dire acquise, par ce capteur d'images.

Ici, ce capteur 11 est adapté plus précisément à ce que le signal qu'il acquiert est non seulement représentatif de la présence d'un obstacle dans son champ de détection 110, mais est également représentatif d'une distance séparant le capteur 11 et cet obstacle.

Lorsque ce capteur 11 comprend un lidar ou un radar, cette distance peut notamment être déduite d'un temps de vol de l'onde lumineuse ou de l'onde radio réfléchie par cet obstacle présent dans le champ de détection 110, ce temps de vol étant obtenu à partir du signal d'écho capturé par ce lidar ou ce radar.

Lorsque ce capteur 11 est réalisé sous la forme d'un capteur d'images, cette distance peut par exemple être déduite de la taille de l'obstacle, dans une image capturée par le capteur d'images.

En variante, ledit capteur pourrait être réalisé sous la forme d'un capteur hybride comprenant plusieurs capteurs, par exemple comprenant à la fois une caméra vidéo et un lidar.

Le capteur 11 est disposé ici à l'avant du véhicule 1 automobile. Son champ de détection 110 s'étend face au véhicule 1 automobile. Plus particulièrement, ce champ de détection 110 est globalement centré sur l'axe longitudinal du véhicule 1. Ainsi, lorsque le véhicule 1 circule en ligne droite sur un tronçon de route rectiligne, ce champ de détection 110 inclue la partie de ce tronçon de route située devant le véhicule 1. Un obstacle vers lequel se dirige le véhicule 1 automobile, situé sur ce tronçon de route, peut alors être détecté au moyen de ce capteur 11.

Le dispositif d'aide à la conduite 10 comprend également un module de commande 12, qui reçoit le signal acquis par ce capteur 11, ou tout au moins des données extraites de ce signal.

La position et l'orientation du champ de détection 110 du capteur 11 par rapport au véhicule 1 automobile, ainsi que son étendue sont connues du module de commande 12. Plus précisément, des données représentatives de la position des limites de ce champ de détection 110 par rapport au véhicule 1 sont enregistrées dans une mémoire du module de commande 12.

Ce module de commande 12 est adapté à commander différents organes du véhicule 1, notamment :

- un bloc moteur de ce véhicule 1, de manière à pouvoir commander la vitesse du véhicule 1, et
- un système de freinage de ce véhicule 1, de manière à pouvoir commander une décélération du véhicule 1.

Ce module de commande 12 est programmé pour piloter une fonction d'aide à la conduite du véhicule 1 automobile en fonction du signal acquis par ledit capteur 11.

Plus précisément, le module de commande 12 est programmé pour, dans un premier temps :

- détecter la présence d'un obstacle dans le champ de détection 110 du capteur 11, et déterminer alors la distance séparant cet obstacle dudit capteur 11, ou
- détecter l'absence d'obstacle dans le champ de détection 110 de ce capteur 11,

au moyen dudit capteur 11.

Préférentiellement, le module de commande 12 est programmé pour déterminer également une vitesse de déplacement de l'obstacle dont la présence a été ainsi détectée. Cette vitesse peut par exemple être déterminée sur la base d'au moins deux déterminations successives de la distance séparant cet obstacle dudit capteur 11.

Le module de commande 12 est programmé pour piloter ensuite ladite fonction d'aide à la conduite en tenant compte, s'il y a lieu (c'est-à-dire si cet obstacle a été détecté), de la présence de cet obstacle dans le champ de détection 110 du capteur.

La fonction d'aide à la conduite peut comprendre une fonction de réduction de la vitesse du véhicule automobile permettant notamment, à l'approche d'un obstacle, de faire décélérer le véhicule 1 automobile sans intervention ou avec une intervention réduite d'un conducteur de ce véhicule 1.

Lorsque cette fonction est active, le module de commande 12 commande le bloc moteur du véhicule, et éventuellement le système de freinage, pour, à l'approche d'un obstacle, faire décélérer le véhicule 1.

Plus précisément, le module de commande 12 est par exemple programmé pour commander une telle décélération lorsqu'un obstacle est détecté dans le champ de détection 110 du capteur 11, à une distance du capteur 11 inférieure à une distance limite donnée.

Cette distance limite peut correspondre par exemple à une distance d'arrêt du véhicule, ou à une distance de sécurité recommandée.

Cette distance d'arrêt correspond, pour une vitesse de déplacement donnée du véhicule 1, à une distance nécessaire pour faire décélérer le véhicule 1 automobile jusqu'à l'arrêter. Cette distance d'arrêt peut prendre en compte le temps de réaction du dispositif d'aide à la conduite 10, c'est-à-dire le temps nécessaire pour acquérir et traiter ledit signal, puis pour déclencher cette décélération.

Cette distance de sécurité recommandée correspond par exemple, pour une vitesse de déplacement donnée du véhicule 1, à une distance parcourue par le véhicule 1 (à cette vitesse de déplacement) pendant une durée correspondant au temps de réaction moyen d'un conducteur, ou au temps de réaction du dispositif d'aide à la conduite 10.

La distance limite précitée peut être déterminée en fonction également de la vitesse de déplacement de l'obstacle détecté et /ou de la vitesse du véhicule 1.

Le module de commande 12 peut également être programmé pour commander une telle décélération lorsque la vitesse de déplacement de l'obstacle détecté est inférieure à la vitesse du véhicule 1 automobile.

Le module de commande 12 peut aussi être programmé pour,

- déterminer qu'un obstacle précédemment détecté dans le champ de détection 110 n'est plus présent dans ce champ de détection 110, et
- commander alors le bloc moteur de manière à rétablir la vitesse à laquelle se déplaçait le véhicule 1 automobile avant détection de cet obstacle.

Une adaptation automatique de la vitesse du véhicule 1 automobile à son environnement routier (ou ACC, selon l'acronyme anglo-saxon de « Adaptative Cruise Control ») est ainsi mise en oeuvre par le module de commande 12.

La fonction d'aide à la conduite peut comprendre également une fonction de suivi automatique de véhicule permettant, lorsqu'un autre véhicule précède le véhicule 1 automobile équipé du dispositif d'aide à la conduite 10, sur la même voie de circulation, de maintenir la distance séparant les deux véhicules approximativement égale à une distance de consigne, et ce sans intervention, ou avec une intervention réduite du conducteur. L'obstacle dont la présence est détectée dans le champ de détection 110 dudit capteur 11 correspond alors à ce véhicule suivi.

Pour mettre en oeuvre cette fonction d'aide à la conduite, le module de commande 12 est par exemple programmé pour commander la vitesse du véhicule 1 de telle sorte que la distance séparant ledit capteur 11 du véhicule suivi, déterminée sur la base du signal acquis par ce capteur 11, est approximativement égale à cette distance de consigne.

Cette distance de consigne peut par exemple être égale à la distance de sécurité précitée.

Le module de commande 12 peut également être programmé pour, lorsqu'un obstacle est détecté dans le champ de détection 110 dudit capteur 11, commander le bloc moteur, et éventuellement le système de freinage, pour que le véhicule 1 automobile atteigne une vitesse de consigne, cette vitesse de consigne étant déterminée en fonction notamment de la distance séparant le capteur 11 et cet obstacle, et éventuellement en fonction de la vitesse de déplacement de cet obstacle.

Selon une caractéristique particulièrement remarquable, le module de commande 12 est programmé pour :

a) détecter, sur la base d'une position du véhicule 1 automobile qu'il équipe, et de caractéristiques de la route 2 qu'il emprunte, une portion 20 de cette route 2 située hors du champ de détection 110 dudit capteur 11 (comme cela est représenté sur les figures 2 à 6B), et

b) en cas de détection de cette portion de route 20 située hors du champ de détection 110 dudit capteur 11, piloter ladite fonction d'aide à la conduite en tenant compte de la présence potentielle d'un obstacle au niveau de ladite portion de route 20.

Les étapes a) et b) sont décrites plus en détail ci-dessous.

Etape a).

Préférentiellement, le dispositif d'aide à la conduite 10 comprend un système de navigation 13 comportant des moyens de localisation adaptés à déterminer ladite position du véhicule 1 automobile, ainsi que des données cartographiques numériques comprenant lesdites caractéristiques de la route 2 empruntée par le véhicule 1 automobile.

Les moyens de localisation comprennent par exemple un système de réception et de traitement de signaux GPS ou GMS (selon l'acronyme anglo-saxon de « Global System for Mobile communication ») autorisant une détermination d'une position du véhicule 1, ici de coordonnées géographiques repérant le véhicule 1.

Les données cartographiques numériques décrivent notamment le réseau routier qu'emprunte le véhicule 1. Ces données cartographiques décrivent en particulier le tracé des routes de ce réseau, en indiquant par exemple, pour chacune de ces routes, les coordonnées géographiques de plusieurs points successifs situés le long de cette route. Ces données cartographiques peuvent également comporter, pour chacun de ces points, une indication de courbure, de direction ou de pente de la route correspondante, au niveau de ce point.

Le véhicule 1 peut ainsi être localisé sur ce réseau routier, par une mise en correspondance de ses coordonnées géographiques et desdites données géographiques numériques (processus de « Map Matching » selon la dénomination anglo-saxonne). En particulier, le système de navigation 13 peut ainsi identifier la route 2 sur laquelle circule le véhicule 1 automobile, déterminer sa position le long de cette route 2, ainsi que le sens dans lequel le véhicule 1 automobile parcoure cette route 2. Le système de navigation 13 peut également déterminer une orientation du véhicule 1 automobile par rapport à la direction que présente cette route 2 au niveau du véhicule 1.

Des caractéristiques de cette route 2, représentatives de la géométrie d'une partie de cette route 2 vers laquelle se dirige le véhicule 1 automobile, peuvent alors être déduites des données cartographiques numériques du système de navigation 13.

Le module de commande 12 est alors programmé pour détecter qu'une portion 20 de cette route 2 est située hors du champ de détection 110 dudit capteur 11, sur la base :

- de la position et de l'orientation du véhicule 1 automobile par rapport à cette route 2,
- des données représentatives de la position des limites du champ de détection 110 dudit capteur 11 par rapport à ce véhicule 1, et

- des caractéristiques de la partie de la route 2 vers laquelle se dirige le véhicule 1 automobile, fournies par le système de navigation 13.

A cette fin, le module de commande 12 peut par exemple être programmé pour :

- superposer les données représentatives de la position des limites de ce champ de détection 110 aux données cartographiques fournies par le système de navigation 13, compte tenu de la position et de l'orientation du véhicule 1, puis
- déterminer si une portion de cette route 2 est située hors des limites de ce champ de détection 110.

Le module de commande peut aussi être programmé pour détecter ladite portion de route 20 lorsque les caractéristiques de la partie de la route 2 vers laquelle se dirige le véhicule 1 automobile indiquent un changement de direction abrupte de cette route 2, correspondant par exemple à un virage serré, ou lorsqu'elles indiquent un changement notable de la pente de la route 2, correspondant par exemple au sommet d'une côte.

Les figures 2 à 6B représentent schématiquement différentes configurations routières dans lesquelles une portion 20 de la route 2 empruntée par le véhicule 1 automobile est située hors du champ de détection 110 dudit capteur, ce qui détecté par le module de commande 12, comme expliqué précédemment.

Dans la configuration représentée sur la figure 2, le véhicule 1 automobile circule en ligne droite sur un tronçon de route rectiligne, suivi s'un virage serré. La portion de route 20 située au delà de ce virage (dans le sens de déplacement du véhicule 1) est ainsi située hors du champ de détection 110 dudit capteur 11.

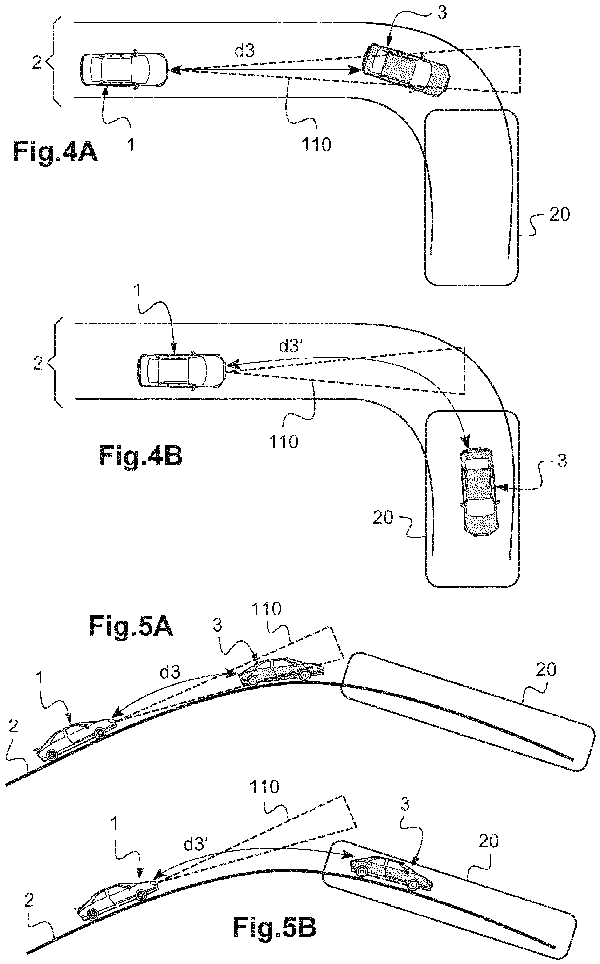

Les figures 4A et 4B représentent schématiquement, à deux instants successifs, une configuration routière similaire à celle de la figure 2, dans laquelle le véhicule 1 automobile suit en outre un autre véhicule 3.

Dans la situation correspondant à la figure 4A, ces deux véhicules sont situés sur le tronçon de route rectiligne, si bien que le véhicule suivi 3 est situé au moins en partie dans le champ de détection 110 dudit capteur 11. Le véhicule suivi 3 est sur le point d'aborder le virage au-delà duquel est située ladite portion de route 20.

Dans la situation correspondant à la figure 4B, le véhicule 1 automobile équipé du dispositif d'aide à la conduite 10 est encore situé sur le tronçon de route rectiligne, tandis que le véhicule suivi 3 a passé le virage, et est ainsi situé au niveau de ladite portion de route 20, hors du champ de détection 110 dudit capteur 11.

Dans la configuration représentée sur la figure 3, le véhicule 1 automobile se dirige vers le sommet d'une côté. La portion de route 20 située au delà du sommet de cette côté (dans le sens de déplacement du véhicule 1) est située hors du champ de détection 110 dudit capteur 11.

Les figures 5A et 5B représentent schématiquement, à deux instants successifs, une configuration routière similaire à celle de la figure 3, dans laquelle le véhicule 1 automobile suit en outre un autre véhicule 3.

Dans la situation correspondant à la figure 5A, ces deux véhicules se dirigent vers le sommet de cette côte. Le véhicule suivi 3 est situé au moins en partie dans le champ de détection 110 dudit capteur 11, et est sur le point de passer le sommet de la côte.

Dans la situation correspondant à la figure 5B, le véhicule 1 automobile équipé du dispositif d'aide à la conduite 10 n'a pas encore passé le sommet de cette côte, tandis que le véhicule suivi 3 est déjà situé de l'autre côté du sommet de cette côte. Le véhicule suivi 3 est ainsi situé au niveau de ladite portion de route 20, hors du champ de détection 110 dudit capteur 11.

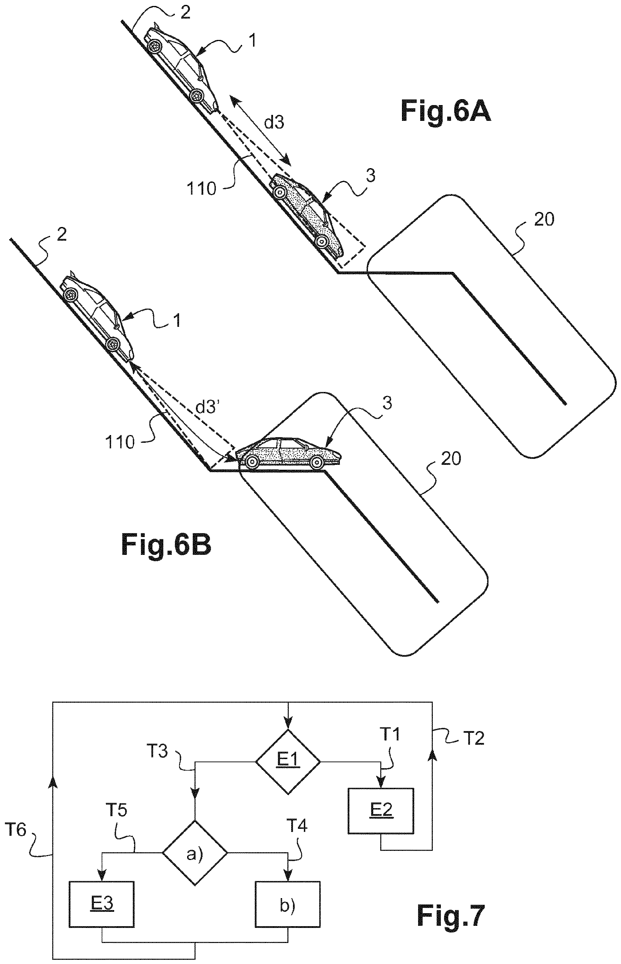

La figure 6A représente schématiquement une configuration routière dans laquelle le véhicule 1 automobile suit un autre véhicule 3. La route 2 empruntée par ces véhicules 1, 3 présente d'importants changements de pentes. Elle comprend un premier tronçon présentant une forte pente, suivi d'un deuxième tronçon approximativement horizontal, lui-même suivi d'un troisième tronçon présentant à nouveau une forte pente. Les deux véhicules 1, 3 sont situés sur ce premier tronçon de route, qu'ils descendent. Le véhicule suivi 3 est alors situé au moins en partie dans le champ de détection 110 du capteur 11 qui équipe le premier véhicule 1. La portion de route 20 comprenant les deuxième et troisième tronçons est par contre située hors de ce champ de détection 110.

La figure 6B représente schématiquement la même configuration routière que sur la figure 6A, à un instant ultérieur. Le véhicule 1 équipé du dispositif d'aide à la conduite 10 est encore situé sur le premier tronçon de route, tandis que le véhicule suivi 3 est situé sur le deuxième tronçon de route, au niveau de ladite portion de route 20, hors du champ de détection 110 dudit capteur 11.

Etape b)

Préférentiellement, le module de commande 12 est programmé pour, lorsque ladite portion de route 20 a été détectée à l'étape a) :

- évaluer une distance d20 ; d3' séparant le véhicule 1 automobile d'une position à laquelle, ou à partir de laquelle l'obstacle potentiellement présent sur cette portion de route 20 est susceptible d'être situé, et
- piloter ladite fonction d'aide à la conduite en fonction de cette distance d20 ; d3'.

Deux modalités d'évaluation et de prise en compte d'une telle distance sont décrites ci-dessous.

Selon un premier mode de réalisation, le module de commande 12 est programmé pour déterminer, sur la base des données ayant servi à détecter ladite portion de route 20 (données cartographiques numériques notamment), une distance d20 séparant le véhicule 1 automobile et la portion de route 20 détectée.

Cette distance d20 correspond par exemple à une distance séparant une extrémité avant du véhicule 1 et une extrémité de cette portion de route 20 située du côté du véhicule 1 (c'est-à-dire correspondant à l'extrémité de cette portion de route la plus proche du véhicule 1).

Cette distance d20 est évaluée le long d'une ligne située sur la route 2, par exemple le long d'une ligne médiane de cette route. Ainsi, cette distance d20 n'est pas nécessairement évaluée en ligne droite, comme on peut le voir sur les figures 2 et 3. Elle est représentative de la distance à parcourir, entre le véhicule 1 automobile et ladite portion de route, pour un trajet réalisé le long de cette route 2.

Le module de commande 12 est programmé alors pour piloter ladite fonction d'aide à la conduite en tenant compte de la présence potentielle d'un obstacle, par exemple d'un obstacle immobile, à la distance d20 du véhicule 1 automobile.

Plus particulièrement, lorsque ladite fonction d'aide à la conduite comprend la fonction précédemment décrite de réduction de la vitesse du véhicule 1 à l'approche d'un obstacle, le module de commande 12 commande une décélération du véhicule 1 lorsque la distance d20 séparant le véhicule 1 automobile et ladite portion de route 20 détectée est inférieure à la distance limite précitée.

Selon un deuxième mode de réalisation, le module de commande 12 est programmé pour :

lorsque la présence d'un obstacle dans le champ de détection 110 dudit capteur 11 est détectée sur la base du signal acquis par ce capteur 11, puis que cet obstacle sort du champ de détection 110 de ce capteur 11 et que ladite portion de route 20 est détectée à l'étape a),
estimer alors que ledit obstacle est présent au niveau de ladite portion de route 20.

Cet obstacle peut correspondre notamment à un autre véhicule 3, suivi par le véhicule 1 automobile équipé du dispositif d'aide à la conduite 10.

Ainsi, lorsque le véhicule 1 automobile suit cet autre véhicule 3, que ce dernier sort du champ de détection 110 dudit capteur 11, et que ladite portion de route 20 est détectée à l'étape a), le module de commande 12 estime ici que ce véhicule suivi 3 est présent sur ladite portion de route 20 située hors du champ de détection 110.

Préférentiellement, le module de commande 12 est programmé alors pour, lorsqu'il a estimé ainsi que ledit obstacle est présent au niveau de ladite portion de route 20 :
déterminer une distance probable d3' séparant cet obstacle et le véhicule 1 automobile (cette distance probable d3' est représentée sur les figures 4B, 5B et 6B), en fonction d'une distance d3 entre ledit obstacle et ledit capteur 11 déterminée sur la base du signal ayant permis précédemment de détecter la présence de cet obstacle dans le champ de détection 110 dudit capteur 11 (cette distance d3 est représentée sur les figures 4A, 5A et 6A).

Préférentiellement, le module de commande est programmé en outre pour déterminer ladite distance probable d3' en fonction d'une vitesse v3 de déplacement de cet obstacle, déterminée en fonction dudit signal ayant permis précédemment de détecter la présence de cet obstacle dans le champ de détection 110 dudit capteur 11.

Ici, le module de commande 12 est programmé plus précisément pour, lorsque le véhicule 1 automobile suit un autre véhicule 3 :

- détecter la présence de ce véhicule suivi 3 dans le champ de détection 110 dudit capteur 11, et déterminer, sur la base du signal acquis par ce capteur 11, la distance d3 séparant les deux véhicules 1, 3 à la date t de cette détection, ainsi que la vitesse v3 du véhicule suivi 3 par rapport au véhicule 1 qui le suit ; puis

- détecter l'absence du véhicule suivi 3 dans le champ de détection 110 dudit capteur 11, et détecter ladite portion de route 20 située hors de ce champ de détection (à l'étape a) décrite précédemment) ; puis
- estimer que le véhicule suivi 3 est situé au niveau de ladite portion de route 20 ; puis
- déterminer la distance probable d3' séparant le véhicule suivi 3 et le véhicule 1 automobile qui le suit, en fonction de la distance d3 et de la vitesse v3 du véhicule suivi déterminées précédemment lorsque ce véhicule suivi 3 était présent dans le champ de détection 110 dudit capteur 11.

Le module de commande 12 peut par exemple être programmé pour déterminer la valeur de cette distance probable d3', une date t', conformément à la formule F1 suivante :

$$d3' \ = \ d3 \ + v3 \times (t' \ - \ t) \qquad (F1)$$

Plus généralement, le module de commande 12 peut être programmé pour déterminer cette distance probable d3' par extrapolation, à la date t', de distances séparant les deux véhicules 1, 3 à des dates antérieures, déterminées au moyen dudit capteur 11.

La distance d3 et la distance probable d3' sont évaluées chacune le long d'une ligne située sur la route 2, par exemple le long d'une ligne médiane de cette route. Ainsi, des distances d3, d3' ne sont pas nécessairement évaluées en ligne droite, comme on peut le voir sur les figures 4A à 6B. Chacune de ces distances est représentative, à une date donnée, d'une distance à parcourir entre les deux véhicules 1, 3 pour un trajet réalisé le long de cette route 2.

Dans ce deuxième mode de réalisation, le module de commande 12 est programmé pour, une fois ladite distance probable d3' déterminée, piloter ladite fonction d'aide à la conduite en tenant compte de la présence dudit obstacle à cette distance probable d3' du véhicule 1.

En particulier, lorsque ladite fonction d'aide à la conduite comprend la fonction précédemment décrite de réduction de la vitesse du véhicule 1 à l'approche d'un obstacle, le module de commande 12 commande une décélération du véhicule 1 lorsque ladite distance probable d3' est inférieure à la distance de sécurité précitée.

Lorsque la fonction d'aide à la conduite comprend la fonction de suivi automatique de véhicule décrite précédemment, le module de commande 12 est programmé pour, lorsqu'il a estimé que le véhicule suivi 3 est présent au niveau de ladite portion de route 20, commander la vitesse du véhicule 1 qu'il équipe de sorte que ladite distance probable d3' séparant le véhicule suivi 3 du véhicule 1 qui le suit est approximativement égale à la distance de consigne précitée.

Autrement formulé, lorsque le module de commande 12 estime que le véhicule suivi 3 est sorti du champ de détection 110 dudit capteur 11 pour entrer sur ladite portion de route 20, il se base, pour commander la vitesse du véhicule 1, non plus sur une distance déterminée au moyen de ce capteur 11, mais sur ladite distance probable d3', qu'il estime comme expliqué ci-dessus.

Le module de commande 12 continue ainsi avantageusement à assurer cette fonction de suivi automatique de véhicule, même si le véhicule suivi 3 sort momentanément du champ de détection 110 dudit capteur 11.

Ce mode de fonctionnement est très intéressant, en particulier lorsque la route 2 empruntée est sinueuse, ou lorsqu'elle présente de fréquents changements de pente, car un véhicule suivi sort alors fréquemment du champ de détection d'un tel capteur, sans pour autant libérer la partie de route vers laquelle se dirige le véhicule équipé du dispositif d'aide à la conduite.

En variante, le module de commande 12 peut bien sûr être programmé de manière à combiner les caractéristiques des deux modes de réalisation décrits ci-dessus.

On peut aussi prévoir que le module de commande 12 est programmé pour, à l'étape b), piloter ladite fonction d'aide à la conduite sans pour cela évaluer de distance à partir de laquelle un obstacle est potentiellement présent. Dans ce cas, le module de commande 12 peut par exemple être programmé pour commander au véhicule 1 automobile d'atteindre une vitesse de consigne réduite, lorsque ladite portion de route 20 située hors du champ de détection 110 est détectée.

Sur la figure 7, on a représenté schématiquement les principales étapes d'un procédé d'aide à la conduite mis en oeuvre dans le dispositif d'aide à la conduite 10 décrit ci-dessus.

Au cours de ce procédé, le module de commande 12 du dispositif d'aide à la conduite 10 pilote une fonction d'aide à la conduite du véhicule 1 automobile en fonction d'un signal, acquis par le capteur 11 décrit précédemment, représentatif de la présence d'un obstacle à l'intérieur du champ de détection 110 de ce capteur 11.

Cette fonction d'aide à la conduite peut comprendre notamment la fonction de suivi automatique de véhicule et/ou la fonction de réduction de la vitesse du véhicule 1 automobile à l'approche d'un obstacle présentées ci-dessus.

Selon une caractéristique particulièrement remarquable, au cours de ce procédé, le module de commande 12 exécute les étapes a) et b) qui ont été décrites en détail ci-dessus.

L'organisation des principales étapes de ce procédé, les unes par rapport aux autres, est décrite maintenant plus en détail.

Ici, ce procédé débute par une étape E1, au cours de laquelle le module de commande 12 teste si un obstacle est présent dans le champ de détection 110 dudit capteur 11, sur la base du signal acquis par ce capteur 11.

Au cours de l'étape E1, lorsque la présence de cet obstacle est ainsi détectée, le module de commande détermine en outre une distance d3 séparant le véhicule 1 de cet obstacle, ainsi qu'une vitesse de déplacement de cet obstacle v3, sur la base dudit signal.

Lorsque la présence de cet obstacle est détectée à l'étape E1, le procédé se poursuit alors par une étape E2 (flèche T1 sur la figure 7), au cours de laquelle le module de commande 12 pilote ladite fonction d'aide à la conduite, en tenant compte de la présence de l'obstacle ainsi détecté dans ce champ de détection 110. Par exemple, si la distance d3 entre cet obstacle et le véhicule 1, déterminée à l'étape E1, est inférieure à la distance limite présentée ci-dessus, le module de commande 12 peut, à l'étape E2, commander une décélération du véhicule 1, comme expliqué précédemment.

Après l'étape E2, ce procédé reprend ici à l'étape E1 (flèche T2 sur la figure 7).

Lorsqu'aucun obstacle n'est détecté dans le champ de détection 110 dudit capteur 11, à l'étape E1, le procédé se poursuit par l'étape a) (flèche T3 sur la figure 7).

Lorsque le module de commande 12 détecte, au cours de l'étape a), que la partie de route 2 vers laquelle se dirige le véhicule 1 automobile présente une portion de route 20 située hors du champ de détection 110 dudit capteur 11, le procédé se poursuit par l'étape b) (flèche T4 sur la figure 7).

Une fois l'étape b) exécutée par le module de commande 12, en tenant compte, comme expliqué précédemment, de la présence potentielle d'un obstacle au niveau de ladite portion de route 20, le procédé reprend ici à l'étape E1 (flèche T6 sur la figure 7).

Lorsque le module de commande 12 ne détecte pas, au cours de l'étape a), une telle portion de route située hors du champ de détection 110 dudit capteur 11, le procédé se poursuit par une étape E3 (flèche T5 sur la figure 7).

Au cours de l'étape E3, le module de commande 12 pilote ladite fonction d'aide à la conduite en tenant compte de l'absence probable d'obstacle sur la partie de route vers laquelle se dirige le véhicule. Pour cela, le module de commande peut par exemple commander au véhicule 1 d'adopter une vitesse recommandée pour cette partie de route en l'absence d'autres véhicules.

Après l'étape E3, le processus reprend ici à l'étape E1 (flèche T6 sur la figure 7).

En variante, les étapes de ce procédé peuvent être organisées différemment les unes par rapport aux autres. Par exemple, on peut prévoir que l'étape E1 est répétée plusieurs fois continûment, ainsi que l'étape a), et que les résultats de ces étapes sont ensuite combinées par le module de commande 12 pour commander ladite fonction d'aide à la conduite.

**Revendications**

1. Dispositif d'aide à la conduite (10) d'un véhicule (1) automobile empruntant une route (2), ce dispositif d'aide à la conduite (10) comprenant :

   - un capteur (11) adapté à acquérir un signal représentatif de la présence d'un obstacle (3) à l'intérieur d'un champ de détection (110) de ce capteur (11), et
   - un module de commande (12) programmé pour piloter une fonction d'aide à la conduite du véhicule (1) automobile, en fonction du signal acquis par ledit capteur (11), **caractérisé en ce que** le module de commande (12) est programmé en outre pour :

      a) détecter, sur la base d'une position du véhicule (1) automobile et de caractéristiques de ladite route (2), qu'une portion de cette route (20) est située hors du champ de détection (110) dudit capteur, et
      b) en cas de détection de cette portion de route (20) située hors du champ de détection (110) dudit capteur, piloter ladite fonction d'aide à la conduite en tenant compte de la présence potentielle d'un obstacle (3) au niveau de ladite portion de route (20) **caractérisé en ce que** le module de commande (12) est programmé en outre pour :

         - à l'étape a), déterminer, sur la base de ladite position du véhicule automobile et desdites caractéristiques de la route qu'il emprunte, une distance (d20) séparant le véhicule (1) automobile de ladite portion de route (20), et

         - à l'étape b), piloter ladite fonction d'aide à la conduite en tenant compte de cette distance (d20) séparant le véhicule (1) automobile de ladite portion de route (20).

2. Dispositif d'aide à la conduite (10) selon la revendication 1, comprenant de plus un système de navigation (13) comportant des moyens de localisation adaptés à déterminer ladite position du véhicule (1) automobile, ainsi que des données cartographiques numériques comprenant lesdites caractéristiques de la route (2) empruntée par le véhicule (1) automobile.

3. Dispositif d'aide à la conduite (10) selon l'une des revendications 1 et 2, dans lequel lesdites caractéristiques de la route (2) empruntée par le véhicule (1) automobile comprennent une information représentative d'un changement de direction et/ou de pente de la route empruntée par le véhicule automobile.

4. Dispositif d'aide à la conduite (10) selon l'une des revendications 1 à 3, dans lequel ladite fonction d'aide à la conduite comprend une fonction de réduction de la vitesse du véhicule (1) automobile à l'approche d'un obstacle (3).

5. Dispositif d'aide à la conduite (10) selon la revendication 4, prise dans la dépendance de la revendication 1, dans lequel le module de commande (12) est programmé en outre pour, à l'étape b), commander une décélération du véhicule (1) automobile lorsque la distance (d20) séparant le véhicule automobile de ladite portion de route est inférieure à une distance limite donnée.

6. Dispositif d'aide à la conduite (10) selon l'une des revendications 1 à 5, dans lequel ledit signal est représentatif en outre d'une distance (d3) séparant le capteur (11) et l'obstacle (3) présent dans son champ de détection (110).

7. Dispositif d'aide à la conduite (10) selon l'une des revendications 1 à 6, dans lequel le module de commande (12) est programmé en outre pour :

      lorsque la présence d'un obstacle (3) dans le champ de détection (110) dudit capteur est détectée sur la base du signal acquis par ce capteur (11), puis que cet obstacle (3) sort du champ de détection (110) de ce capteur et que ladite portion de route (20) située hors du champ de détection de ce capteur est détectée à l'étape a), estimer alors que ledit obstacle (3) est présent au niveau de ladite portion de route (20), et piloter ladite fonction d'aide à la conduite en tenant compte de la présence de cet obstacle (3) au niveau de ladite portion de route (20).

8. Dispositif d'aide à la conduite (10) selon la revendication 7, prise dans la dépendance de la revendication 6, dans lequel le module de commande (12) est programmé en outre pour :

lorsqu'il est estimé que ledit obstacle (3) est présent au niveau de ladite portion de route (20), déterminer alors une distance probable (d3') séparant cet obstacle (3) et le véhicule (1) automobile, en fonction d'une distance (d3) entre ledit obstacle (3) et ledit capteur (11) déterminée sur la base du signal ayant permis précédemment de détecter la présence de cet obstacle (3) dans le champ de détection (110) dudit capteur, et

piloter ladite fonction d'aide à la conduite en fonction de ladite distance probable (d3').

9. Dispositif d'aide à la conduite (10) selon la revendication 8, dans lequel le module de commande (12) est programmé en outre pour déterminer ladite distance probable (d3') séparant le véhicule (1) automobile et ledit obstacle (3) en fonction d'une vitesse (v3) de déplacement de cet obstacle (3), déterminée en fonction dudit signal ayant permis précédemment de détecter la présence de cet obstacle (3) dans le champ de détection (110) dudit capteur.

10. Dispositif d'aide à la conduite (10) selon l'une des revendications 8 et 9 prise dans la dépendance de la revendication 4, dans lequel le module de commande (12) est programmé en outre pour commander une décélération du véhicule (1) automobile lorsque ladite distance probable (d3') est inférieure à une distance de sécurité donnée.

11. Dispositif d'aide à la conduite (10) selon l'une des revendications 8 à 10, dans lequel, ledit obstacle (3) étant un autre véhicule automobile suivi par le véhicule (1) automobile qu'équipe le dispositif d'aide à la conduite (10), et ladite fonction d'aide à la conduite comprenant une fonction de suivi automatique de véhicule, le module de commande (12) est programmé en outre pour commander la vitesse du véhicule (1) automobile qu'il équipe de manière que, lorsqu'il est estimé que ledit véhicule suivi (3) est présent au niveau de ladite portion de route (20), ladite distance probable (d3') est environ égale à une distance de consigne donnée.

12. Dispositif d'aide à la conduite (10) selon l'une des revendications 1 à 11, dans lequel ledit capteur (11) comprend un capteur d'images.

13. Procédé d'aide à la conduite d'un véhicule (1) automobile empruntant une route (2), au cours duquel un module de commande (12) pilote une fonction d'aide à la conduite du véhicule (1) automobile en fonction d'un signal, acquis par un capteur (11), représentatif de la présence d'un obstacle (3) à l'intérieur d'un champ de détection (110) de ce capteur (11),

**caractérisé en ce que** le procédé comprend les étapes suivantes :

a) détecter, sur la base d'une position du véhicule (1) automobile et de caractéristiques de ladite route (2), qu'une portion de cette route (20) est située hors du champ de détection (110) dudit capteur (11), et

b) en cas de détection de cette portion de route (20) située hors du champ de détection (110) dudit capteur (11), piloter ladite fonction d'aide à la conduite en tenant compte de la présence potentielle d'un obstacle (3) au niveau de ladite portion de route (20), caractérisé en ce le procédé comprend aussi les caractéristiques suivantes : - à l'étape a), déterminer, sur la base de ladite position du véhicule automobile et desdites caractéristiques de la route qu'il emprunte, une distance (d20) séparant le véhicule (1) automobile de ladite portion de route (20), et - à l'étape b), piloter ladite fonction d'aide à la conduite en tenant compte de cette distance (d20) séparant le véhicule (1) automobile de ladite portion de route (20).

**Patentansprüche**

1. Fahrassistenzvorrichtung (10) eines eine Straße (2) benutzenden Kraftfahrzeugs (1), wobei diese Fahrassistenzvorrichtung (10) enthält:

- einen Sensor (11), der geeignet ist, ein für das Vorhandensein eines Hindernisses (3) innerhalb eines Erkennungsfelds (110) dieses Sensors (11) repräsentatives Signal zu erfassen, und
- ein Steuermodul (12), das programmiert ist, eine Fahrassistenzfunktion des Kraftfahrzeugs (1) abhängig von dem durch den Sensor (11) erfassten Signal zu steuern,

**dadurch gekennzeichnet, dass** das Steuermodul (12) außerdem programmiert ist, um:

a) auf der Basis einer Position des Kraftfahrzeugs (1) und von Merkmalen der Straße (2) zu erkennen, dass ein Abschnitt (20) dieser Straße sich außerhalb des Erkennungsfelds (110) des Sensors befindet, und
b) im Fall der Erkennung dieses außerhalb des Erkennungsfelds (110) des Sensors befindlichen Straßenabschnitts (20), die Fahrassistenzfunktion unter Berücksichtigung des möglichen Vorhandenseins eines Hindernisses (3) im Bereich des Straßenabschnitts (20) zu steuern,

**dadurch gekennzeichnet, dass** das Steuermodul (12) außerdem programmiert ist, um:

- im Schritt a) auf der Basis der Position des Kraftfahrzeugs und der Merkmale der Straße, die es benutzt, einen Abstand (d20) zu bestimmen, der das Kraftfahrzeug (1) vom Straßenabschnitt (20) trennt, und

- im Schritt b) die Fahrassistenzfunktion unter Berücksichtigung dieses das Kraftfahrzeug (1) vom Straßenabschnitt (20) trennenden Abstands (d20) zu steuern.

2. Fahrassistenzvorrichtung (10) nach Anspruch 1, das außerdem ein Navigationssystem (13) enthält, das Lokalisierungseinrichtungen, die geeignet sind, die Position des Kraftfahrzeugs (1) zu bestimmen, sowie digitale kartographische Daten aufweist, die die Merkmale der vom Kraftfahrzeug (1) benutzten Straße (2) enthalten.

3. Fahrassistenzvorrichtung (10) nach einem der Ansprüche 1 und 2, wobei die Merkmale der vom Kraftfahrzeug (1) benutzten Straße (2) eine für eine Richtungs- und/oder Gefälleänderung der vom Kraftfahrzeug benutzten Straße repräsentative Information enthalten.

4. Fahrassistenzvorrichtung (10) nach einem der Ansprüche 1 bis 3, wobei die Fahrassistenzfunktion eine Funktion der Verringerung der Geschwindigkeit des Kraftfahrzeugs (1) beim Herannahen eines Hindernisses (3) enthält.

5. Fahrassistenzvorrichtung (10) nach Anspruch 4, in Abhängigkeit von Anspruch 1, wobei das Steuermodul (12) außerdem programmiert ist, um im Schritt b) eine Verlangsamung des Kraftfahrzeugs (1) zu steuern, wenn der das Kraftfahrzeug vom Straßenabschnitt trennende Abstand (d20) geringer ist als ein gegebener Grenzabstand.

6. Fahrassistenzvorrichtung (10) nach einem der Ansprüche 1 bis 5, wobei das Signal außerdem für einen den Sensor (11) und das in seinem Erkennungsfeld (110) vorhandene Hindernis (3) trennenden Abstand (d3) repräsentativ ist.

7. Fahrassistenzvorrichtung (10) nach einem der Ansprüche 1 bis 6, wobei das Steuermodul (12) außerdem programmiert ist, um:

wenn das Vorhandensein eines Hindernisses (3) im Erkennungsfeld (110) des Sensors auf der Basis des von diesem Sensor (11) erfassten Signals erkannt wird, dann dieses Hindernis (3) das Erkennungsfeld (110) dieses Sensors verlässt und der außerhalb des Erkennungsfelds dieses Sensors befindliche Straßenabschnitt (20) im Schritt a) erkannt wird,
dann davon auszugehen, dass das Hindernis (3) im Bereich des Straßenabschnitts (20) vorhanden ist, und die Fahrassistenzfunktion unter Berücksichtigung des Vorhandenseins dieses Hindernisses (3) im Bereich des Straßenabschnitts (20) zu steuern.

8. Fahrassistenzvorrichtung (10) nach Anspruch 7 in Abhängigkeit von Anspruch 6, wobei das Steuermodul (12) außerdem programmiert ist, um:

wenn davon ausgegangen wird, dass das Hindernis (3) im Bereich des Straßenabschnitts (20) vorhanden ist,
dann einen wahrscheinlichen Abstand (d3') zu bestimmen, der dieses Hindernis (3) und das Kraftfahrzeug (1) trennt, abhängig von einem Abstand (d3) zwischen dem Hindernis (3) und dem Sensor (11), der auf der Basis des Signals bestimmt wird, das vorher ermöglicht hat, das Vorhandensein dieses Hindernisses (3) im Erkennungsfeld (110) des Sensors zu erkennen, und
die Fahrassistenzfunktion abhängig von dem wahrscheinlichen Abstand (d3') zu steuern.

9. Fahrassistenzvorrichtung (10) nach Anspruch 8, wobei das Steuermodul (12) außerdem programmiert ist, um den das Kraftfahrzeug (1) und das Hindernis (3) trennenden wahrscheinlichen Abstand (d3') abhängig von einer Bewegungsgeschwindigkeit (v3) dieses Hindernisses (3) zu bestimmen, die abhängig von dem Signal bestimmt wird, das es vorher ermöglicht hat, das Vorhandensein dieses Hindernisses (3) im Erkennungsfeld (110) des Sensors zu erkennen.

10. Fahrassistenzvorrichtung (10) nach einem der Ansprüche 8 und 9 in Abhängigkeit von Anspruch 4, wobei das Steuermodul (12) außerdem programmiert ist, eine Verlangsamung des Kraftfahrzeugs (1) zu steuern, wenn der wahrscheinliche Abstand (d3') geringer ist als ein gegebener Sicherheitsabstand.

11. Fahrassistenzvorrichtung (10) nach einem der Ansprüche 8 bis 10, wobei, wenn das Hindernis (3) ein anderes Kraftfahrzeug ist, dem das mit der Fahrassistenzvorrichtung (10) ausgestattete Kraftfahrzeug (1) folgt, und die Fahrassistenzfunktion eine automatische Fahrzeugverfolgungsfunktion enthält, das Steuermodul (12) außerdem programmiert ist, um die Geschwindigkeit des Kraftfahrzeugs (1), das mit ihm ausgestattet ist, so zu steuern, dass, wenn davon ausgegangen wird, dass das verfolgte Fahrzeug (3) im Bereich des Straßenabschnitts (20) vorhanden ist, der wahrscheinliche Abstand (d3') etwa gleich einem gegebenen Sollabstand ist.

12. Fahrassistenzvorrichtung (10) nach einem der Ansprüche 1 bis 11, wobei der Sensor (11) einen Bildsensor enthält.

13. Fahrassistenzverfahren eines eine Straße (2) benutzenden Kraftfahrzeugs (1), während dessen ein Steuermodul (12) eine Fahrassistenzfunktion des Kraftfahrzeugs (1) abhängig von einem von einem Sensor (11) erfassten Signal steuert, das für das Vorhandensein eines Hindernisses (3) innerhalb eines Erkennungsfelds (110) dieses Sensors (11) repräsentativ ist,

**dadurch gekennzeichnet, dass** das Verfahren die folgenden Schritte enthält:

a) Erkennen, auf der Basis einer Position des Kraftfahrzeugs (1) und von Merkmalen der Straße (2), dass ein Abschnitt (20) dieser Straße sich außerhalb des Erkennungsfelds (110) des Sensors (11) befindet, und

b) im Fall der Erkennung dieses außerhalb des Erkennungsfelds (110) des Sensors (11) befindlichen Straßenabschnitts (20), Steuern der Fahrassistenzfunktion unter Berücksichtigung des möglichen Vorhandenseins eines Hindernisses (3) im Bereich des Straßenabschnitts (20),

**dadurch gekennzeichnet, dass** das Verfahren auch die folgenden Merkmale enthält:

- im Schritt a), Bestimmen, auf der Basis der Position des Kraftfahrzeugs und der Merkmale der Straße, die es benutzt, eines das Kraftfahrzeug (1) vom Straßenabschnitt (20) trennenden Abstands (d20), und

- im Schritt b), Steuern der Fahrassistenzfunktion unter Berücksichtigung dieses das Kraftfahrzeug (1) vom Straßenabschnitt (20) trennenden Abstands (d20).

**Claims**

1. Driver-assistance device (10) for assisting with driving a motor vehicle (1) following a road (2), this driver-assistance device (10) comprising:

- a sensor (11) suitable for acquiring a signal representative of the presence of an obstacle (3) in the interior of a detection field (110) of this sensor (11), and

- a control module (12) that is programmed to control a driver-assistance function for assisting with driving the motor vehicle (1), depending on the signal acquired by said sensor (11),

**characterized in that** the control module (12) is furthermore programmed:

a) to detect, on the basis of a position of the motor vehicle (1) and of characteristics of said road (2), that a section (20) of this road is located outside of the detection field (110) of said sensor, and

b) in case of detection of this road section (20) located outside of the detection field (110) of said sensor, to control said driver-assistance function while taking into account the potential presence of an obstacle (3) on said road section (20),

**characterized in that** the control module (12) is furthermore programmed:

- in step a), to determine, on the basis of said position of the motor vehicle and of said characteristics of the road that it is following, a distance (d20) separating the motor vehicle (1) from said road section (20), and

- in step b), to control said driver-assistance function while taking into account this distance (d20) separating the motor vehicle (1) from said road section (20).

2. Driver-assistance device (10) according to Claim 1, in addition comprising a navigation system (13) including locating means that are suitable for determining said position of the motor vehicle (1), and digital map data comprising said characteristics of the road (2) followed by the motor vehicle (1).

3. Driver-assistance device (10) according to one of Claims 1 and 2, wherein said characteristics of the road (2) followed by the motor vehicle (1) comprise a piece of information representative of a change in direction and/or in slope of the road followed by the motor vehicle.

4. Driver-assistance device (10) according to one of Claims 1 to 3, wherein said driver-assistance function comprises a function for decreasing the speed of the motor vehicle (1) on the approach of an obstacle (3).

5. Driver-assistance device (10) according to Claim 4, when dependent on Claim 1, wherein the control module (12) is furthermore programmed, in step b), to command a deceleration of the motor vehicle (1) when the distance (d20) separating the motor vehicle from said road section is smaller than a given limiting distance.

6. Driver-assistance device (10) according to one of Claims 1 to 5, wherein said signal is furthermore representative of a distance (d3) separating the sensor (11) and the obstacle (3) present in its detection field (110).

7. Driver-assistance device (10) according to one of Claims 1 to 6, wherein the control module (12) is furthermore programmed:

when the presence of an obstacle (3) in the detection field (110) of said sensor is detected on the basis of the signal acquired by this sensor (11), then this obstacle (3) exits from the detection field (110) of this sensor and said road section (20) located outside of the detection field of this sensor is detected in step a), to then conclude that said obstacle (3) is present on said road section (20), and to control said driver-assistance function while taking into account the presence of this obstacle (3) on said road section (20).

8. Driver-assistance device (10) according to Claim 7, when dependent on Claim 6, wherein the control module (12) is furthermore programmed:

when it is concluded that said obstacle (3) is present on said road section (20), to then determine a probable distance (d3') separating this obstacle (3) and the motor vehicle (1), depending on a distance (d3), between said obstacle (3) and said sensor (11), determined on the basis of the signal having permitted beforehand the presence of this obstacle (3) in the detection field (110) of said sensor to be detected, and to control said driver-assistance function depending on said probable distance (d3').

9. Driver-assistance device (10) according to Claim 8, wherein the control module (12) is furthermore programmed to determine said probable distance (d3') separating the motor vehicle (1) and said obstacle (3) depending on a speed (v3) of movement of this obstacle (3), determined depending on said signal having permitted beforehand the presence of this obstacle (3) in the detection field (110) of said sensor to be detected.

10. Driver-assistance device (10) according to one of Claims 8 and 9 when dependent on Claim 4, wherein the control module (12) is furthermore programmed to command a deceleration of the motor vehicle (1) when said probable distance (d3') is smaller than a given safety distance.

11. Driver-assistance device (10) according to one of Claims 8 to 10, wherein, said obstacle (3) being another motor vehicle followed by the motor vehicle (1) equipped with the driver-assistance device (10), and said driver-assistance function comprising a function for automatically following a vehicle, the control module (12) is furthermore programmed to control the speed of the motor vehicle (1) that is equipped therewith so that, when it is concluded that said followed vehicle (3) is present on said road section (20), said probable distance (d3') is about equal to a given setpoint distance.

12. Driver-assistance device (10) according to one of Claims 1 to 11, wherein said sensor (11) comprises an image sensor.

13. Driver-assistance method for assisting with driving a motor vehicle (1) following a road (2), in which a control module (12) controls a driver-assistance function for assisting with driving the motor vehicle (1) depending on a signal, acquired by a sensor (11), representative of the presence of an obstacle (3) in the interior of a detection field (110) of this sensor (11), **characterized in that** the method comprises the following steps:

a) detecting, on the basis of a position of the motor vehicle (1) and of characteristics of said road (2), that a section (20) of this road is located outside of the detection field (110) of said sensor (11), and
b) in case of detection of this road section (20) located outside of the detection field (110) of said sensor (11), controlling said driver-assistance function while taking into account the potential presence of an obstacle (3) on said road section (20),

**characterized in that** the method also comprises the following features:

- in step a), on the basis of said position of the motor vehicle and of said characteristics of the road that it is following, a distance (d20) separating the motor vehicle (1) from said road section (20) is determined, and
- in step b), said driver-assistance function is controlled while taking into account this distance (d20) separating the motor vehicle (1) from said road section (20).

**Fig.1**

**Fig.2**

**Fig.3**

**Fig.4A**

2

d3

3

1

110

20

**Fig.4B**

1

2

d3'

110

3

20

**Fig.5A**

110

3

d3

1

2

20

110

1

d3'

3

20

2

**Fig.5B**

Fig.6A

Fig.6B

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102009055787 A
- EP 1736797 A